# EUROPEAN PATENT APPLICATION

(11) **EP 4 772 428 A1**
(43) Date of publication of application: **08.07.2026**
(21) Application number: 25823902.9
(22) Date of filing: 23.01.2025
(51) Int. Cl.: B62L 3/02, B60T 11/16

(54) **HYDRAULIC BALANCING STRUCTURE, BRAKE LEVER, BRAKE CALIPER AND CABLE-ACTUATED HYDRAULIC CONVERSION PUMP**

(30) Priority: 03.07.2024 CN 202421552992 U; 13.08.2024 CN 202421947261 U; 23.10.2024 CN 202411480832
(71) Applicant: Lanxi Jieke Sports Apparatus Manufacturing Co., Ltd., Hangzhou, Zhejiang 321199 (CN)
(72) Inventor: YU, Zhijun, Jinhua, Zhejiang 321199 (CN); WU, Sibin, Jinhua, Zhejiang 321199 (CN); CHENG, Yao, Jinhua, Zhejiang 321199 (CN)
(74) Representative: JD&P Patent Attorneys Joanna Dargiewicz & Partners
(86) International application number: PCT/CN2025/074495
(87) International publication number: WO 2026/007394

(57) **Abstract**

Disclosed is an oil pressure balance structure, a brake lever, a brake caliper, and a cable-actuated hydraulic conversion pump. The oil pressure balance structure is used in conjunction with a pump mechanism, which is equipped with at least one oil cylinder chamber, at least one oil reservoir chamber, and an oil pressure balancing component; the oil cylinder chamber is formed on the pump body and is communicated to an oil outlet in a radial direction; the oil reservoir chamber is formed on the pump body and is communicated to the oil cylinder chamber through a communication hole, and the oil reservoir chamber and the oil cylinder chamber are filled with brake fluid; the oil pressure balancing component is arranged inside the oil reservoir chamber to replenish brake fluid to the oil cylinder chamber during braking to balance brake oil pressure. During the braking process, the brake fluid in the oil reservoir chamber automatically replenishes into the oil cylinder chamber where the pressure is reduced to maintain sufficient oil in the brake system for braking, ensuring the braking performance of the vehicle.

## Description

### TECHNICAL FIELD

The present disclosure relates to the technical field of vehicle brake accessories, in particular to an oil pressure balance structure, a brake lever, a brake caliper, and a cable-actuated hydraulic conversion pump.

### BACKGROUND

The cable-actuated hydraulic disc brake is a novel disc brake that combines cable-actuated mechanical disc brake and hydraulic disc brake in the current market. It has the advantages of the cable-actuated mechanical disc brake and the hydraulic disc brake, with low cost and good braking experience.

The key component of the cable-actuated hydraulic disc brake is the cable-actuated hydraulic conversion pump, which converts the pulling force of the brake lever into hydraulic pressure to supply the oil-pressure lower pump. Existing cable-actuated hydraulic conversion pumps also share the drawbacks of traditional hydraulic disc brakes-after prolonged use, as the brake pads wear out, the piston in the oil-pressure lower pump requires greater hydraulic pressure to push forward for braking, and insufficient brake fluid pressure can lead to brake failure.

At this point, it is necessary to open the oil seal plug to replenish the brake fluid into the oil cylinder chamber. The oil hole is typically located on the oil reservoir chamber connected to the oil cylinder chamber. Opening the oil hole allows air to enter the braking system. However, due to limitations in the oil circuit, not all air may be completely expelled during the fluid replenishment process. The retained air will not improve the brake failure of the brake system after fluid replacement, and may even pose a greater risk.

In view of above, an oil pressure balance structure, a brake lever, a brake caliper, and a cable-actuated hydraulic conversion pump are provided.

### SUMMARY

This application provides an oil pressure balance structure, a brake lever, a brake caliper, and a cable-actuated hydraulic conversion pump to at least solve the problem in the prior art that during the process of replenishing fluid and discharging air in the brake system, the internal air may not be completely discharged due to the limitation of the oil circuit, and the retained air may cause the brake system to not improve after replenishing fluid, and even pose a greater risk.
In the first aspect, the present application provides an oil pressure balance structure, which is used in conjunction with a pump mechanism, wherein the pump mechanism is provided with at least one oil cylinder chamber, at least one oil reservoir chamber, and an oil pressure balancing component;
The oil cylinder chamber is formed on the pump body and is communicated to an oil outlet in a radial direction;
The oil reservoir chamber is formed on the pump body and is communicated to the oil cylinder chamber through a communication hole, and the oil reservoir chamber and the oil cylinder chamber are filled with brake fluid; and
The oil pressure balancing component is arranged inside the oil reservoir chamber to replenish brake fluid to the oil cylinder chamber during braking to balance brake oil pressure.

Optionally, the oil pressure balancing component includes a piston, an oil seal plug, and an oil reservoir chamber cover,
The piston is movably arranged inside the oil reservoir chamber, an annular outer wall of the piston is movably sealed with the inner wall of the oil reservoir chamber, and the piston moves toward a direction where the communication hole is located during braking, so as to replenish the brake fluid to the oil cylinder chamber during braking to balance brake oil pressure;
The oil reservoir chamber cover is fixedly arranged on an open end of the oil reservoir chamber, and the oil reservoir chamber cover is provided with a balance hole communicating to external atmospheric pressure.

Optionally, the oil pressure balancing component further includes a fluid replenishment channel, and a oil seal plug,
The fluid replenishment channel is formed and axially penetrates on the piston;
The middle of the oil seal plug is provided with an external threaded section, and the external threaded section is assembled with an internal threaded surface formed on the inner wall of the fluid replenishment channel to seal the fluid replenishment channel.

Optionally, the inner cavity of the fluid replenishment channel is provided with a tapered sealing surface, and the tail of the oil seal plug is formed with a tapered end that cooperates with the tapered sealing surface to seal the fluid replenishment channel.

Optionally, an oil injection side hole is formed in the middle of the oil seal plug in the longitudinal direction, the first end of the oil injection side hole penetrates to the head of the oil seal plug, and the second end of the oil injection side hole penetrates to the annular side wall of the oil seal plug near the tapered end.

Optionally, the annular outer wall of the piston is fitted with a seal ring, and the annular outer wall of the seal ring is in contact with the inner wall of the oil reservoir chamber for sealing.

Optionally, the diameter of the balance hole is at least greater than the diameter of the head of the oil seal plug.

In the second aspect, the present application provides a brake lever assembled at the handlebar of the vehicle frame, which is equipped with the pump mechanism and the oil pressure balance structure of the first aspect mentioned above.

In the third aspect, the present application provides a brake caliper assembled at the front/rear wheels of a vehicle frame, which is equipped with the pump mechanism and the oil pressure balance structure of the first aspect mentioned above.

In the fourth aspect, the present application provides a cable-actuated hydraulic conversion pump, which is assembled on a vehicle frame and connected to the brake master cylinder through a cable/oil pipe, and connected to the brake slave pump through an oil pipe. The cable-actuated hydraulic conversion pump is provided with the pump mechanism inside and has the oil pressure balance structure of the first aspect mentioned above.

Compared to related technologies, the oil pressure balance structure, the brake lever, the brake caliper, and the cable-actuated hydraulic conversion pump provided in this application have at least the following technical effects:
Through the movable assembly of the piston body in the oil reservoir chamber and the limit stroke of the oil reservoir chamber cover, as the brake pads wear, during the braking process, the brake fluid in the oil reservoir chamber automatically replenishes into the oil cylinder chamber where the pressure is reduced. The piston body moves in the direction of the brake fluid output, thereby maintaining sufficient oil volume in the brake system for braking.

The details of one or more embodiments of the present application are set forth in the accompanying drawings and the description below. Other features, objectives, and advantages of the present application will be apparent from the following description and drawings.

### BRIEF DESCRIPTION OF THE DRAWINGS

In order to illustrate the technical solutions in the specific embodiments of the present invention or in the prior art more clearly, the accompanying drawings required for describing the specific embodiments or the prior art will be briefly introduced below. Obviously, the accompanying drawings in the following description show only some embodiments of the present invention. For those of ordinary skill in the art, other drawings may be derived from these accompanying drawings without creative effort.
FIG. 1 is a perspective view of an oil pressure balance structure according to a first exemplary embodiment.
FIG. 2 is a cross-sectional view of a pump mechanism according to the first exemplary embodiment.
FIG. 3 is an enlarged partial view of the structure of the portion A in FIG. 2.
FIG. 4 is a perspective view of an oil pressure balancing component according to the first exemplary embodiment.
FIG. 5 is a perspective view of the oil pressure balance structure according to a second exemplary embodiment.
FIG. 6 is a perspective view of the pump mechanism according to the second exemplary embodiment.
FIG. 7 is a perspective view of the oil pressure balancing component according to the second exemplary embodiment.
FIG. 8 is a perspective view of the pump mechanism according to a third exemplary embodiment.
FIG. 9 is an exploded view of the oil pressure balancing component according to the third exemplary embodiment.
FIG. 10 is an exploded view of the pump mechanism according to the second exemplary embodiment.

### Reference numbers in the drawings:

10-pump mechanism; 101-oil cylinder chamber; 102-oil reservoir chamber; 103-communication hole; 104-oil outlet;
20-oil pressure balancing component; 201-piston; 202-oil reservoir chamber cover; 203-balance hole; 204-cotter pin; 2041-cover plate bolt; 205-fluid replenishment channel; 206-oil seal plug; 2601-tapered end; 207-oil injection side hole; 208-first seal ring;
30-cable-actuated hydraulic brake component; 301-piston rod; 302-piston ring; 303-end cover plate; 3031-second assembly hole; 304-brake-cable clamp terminal; 305-elastic component; 306-plug base; 307-sealing sleeve insert; 308-cable threading sleeve; 309-second seal ring; 40-hydraulic piston; 50-handbrake lever.

### DETAILED DESCRIPTION OF THE EMBODIMENTS

The technical solutions of the present invention will be described clearly and completely below in conjunction with the accompanying drawings. Obviously, the described embodiments represent only a part of the embodiments of the present invention, rather than all of the embodiments. Based on the embodiments of the present application, all other embodiments obtained by those of ordinary skill in the art without creative effort shall fall within the scope of the present application.

In the description of the present invention, it should be understood that if orientation or position relations indicated by the terms such as "central," "upper," "lower," "left," "right," "vertical," "horizontal," "internal," "external," etc., are based on the orientation or position relations shown in the drawings, and the terms are intended only to facilitate the description of the present invention and simplify the description, rather than indicating or implying that the apparatus or element referred to must have a particular orientation and be constructed and operated in the particular orientation, and therefore cannot be construed as a limitation on the present invention. Furthermore, the terms "first," "second," are merely for the purpose of description, but cannot be understood as indicating or implying relative importance.

In the description of the present application, it should be noted that, unless otherwise explicitly specified and defined, the terms "installed," "connected," and "coupled" shall be understood in a broad sense. For example, a connection may be a fixed connection, a detachable connection, or an integral connection; it may be a mechanical connection, an electrical connection, or a direct connection; it may also be an indirect connection through an intermediate medium. For those of ordinary skill in the art, specific meanings of the above terms in the present invention can be understood according to specific situations.

In related technologies, the key component of the cable- actuated hydraulic disc brake is the cable- actuated hydraulic conversion pump, which is used to convert the cable- actuated force of the cable- actuated brake lever into oil pressure and deliver it to the oil-pressure lower pump. The existing cable- actuated hydraulic conversion pump also has the disadvantages of traditional hydraulic disc brakes, that is, after a period of use, as the brake pads wear out, the piston inside the lower brake pump will require more brake fluid pressure to push forward to brake, and insufficient brake fluid pressure will cause brake failure;
At this time, it is necessary to open the oil hole sealed by the oil seal plug to replenish brake fluid into the cylinder chamber. The oil hole is usually formed at the oil reservoir chamber in communication with the cylinder chamber. When the oil hole is opened, air will enter the braking system. However, due to the limitation of the hydraulic circuit, all the air in the braking system may not be exhausted, and the retained air will make the braking failure of the braking system after brake fluid replacement not improved, or even more risky.

Based on the above situation, the embodiments of the present disclosure provide an oil pressure balance structure, a brake lever, a brake caliper, and a cable-actuated hydraulic conversion pump. The following will be described in detail in conjunction with specific embodiments and accompanying drawings.

### Embodiment 1

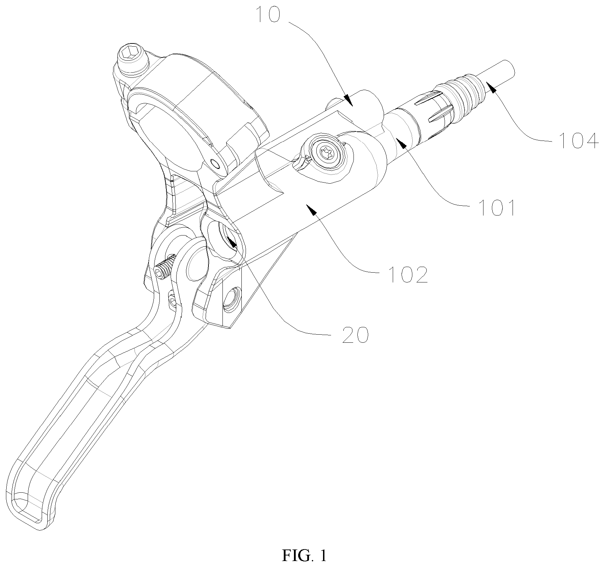

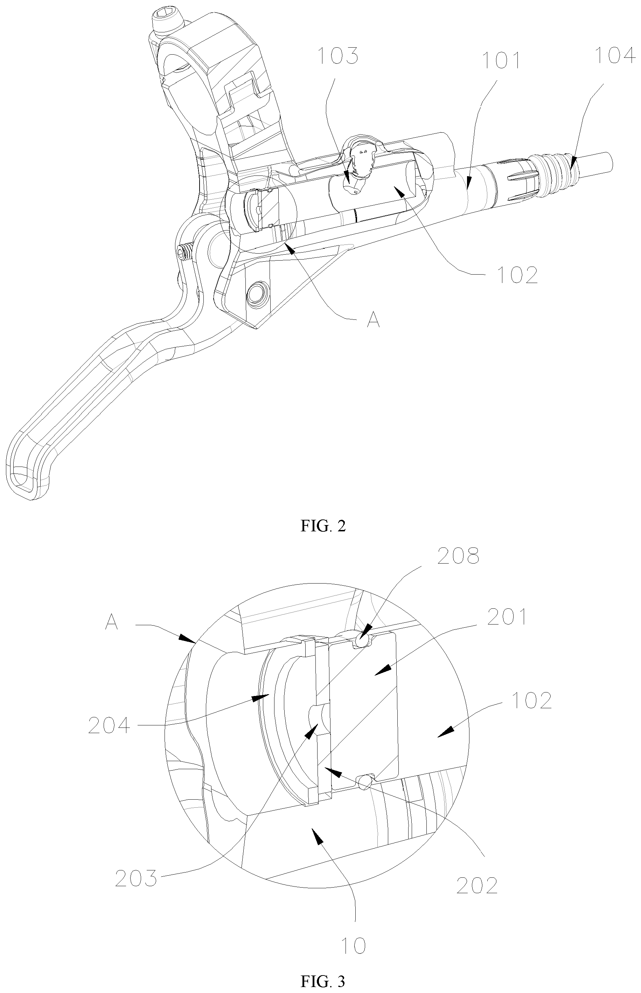

The embodiment of the present disclosure provide an oil pressure balance structure. Fig. 1 is a structural schematic diagram of an oil pressure balance structure according to one embodiment. Fig. 2 is a sectional view of a pump mechanism according to one embodiment. As shown in Fig. 1 to Fig. 2, the oil pressure balance structure is used in conjunction with a pump mechanism 10, the pump mechanism 10 is provided with at least one oil cylinder chamber 101, at least one oil reservoir chamber 102, an oil pressure balancing component 20.

At least one oil cylinder chamber 101 is provided. The oil cylinder chamber 101 is formed on the pump mechanism 10 and is communicated to an oil outlet 104 in the radial direction.

In the embodiment, referring to Fig. 1 to Fig. 2, the number of the oil cylinder chamber 101 is two and arranged in parallel;
At least one oil reservoir chamber 102 is provided. The oil reservoir chamber 102 is formed on the pump mechanism 10 and is communicated to the oil cylinder chamber 101 through a communication hole 103. The oil reservoir chamber 102 and the oil cylinder chamber 101 are filled with brake fluid which can meet the braking requirements.

The oil pressure balancing component 20 is movably arranged inside the oil reservoir chamber 102 to replenish brake fluid to the oil cylinder chamber 101 during braking, so as to balance the brake oil pressure.

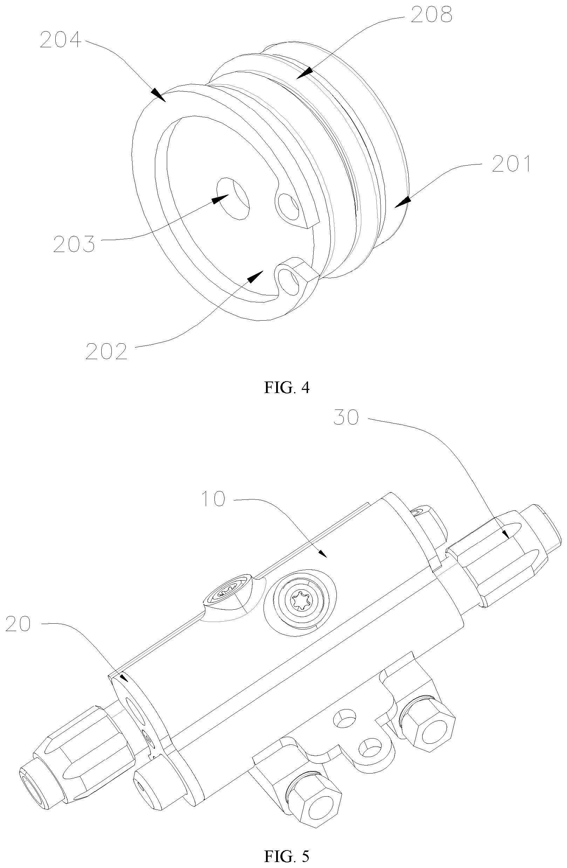

Fig. 3 is an enlarged view of potion A in Fig. 2. Fig. 4 is a structural schematic diagram of an oil pressure balancing component according to one embodiment. Referring to Fig. 1 to Fig. 4, in the embodiment, the oil pressure balancing component 20 includes a piston 201 and an oil reservoir chamber cover 202.

The piston 201 is movably arranged inside the oil reservoir chamber 102, and its annular outer wall is movably sealed with the inner wall of the oil reservoir chamber 102. The piston 201 moves in the direction of the communication hole 103 to replenish the brake fluid into the oil cylinder chamber 101 during braking, so as to balance the brake oil pressure;
The oil reservoir chamber cover 202 is fixedly arranged at the open end of the oil reservoir chamber 102 through a cotter pin 204, and the oil reservoir chamber cover 202 is provided with a balance hole 203 communicating to the external atmospheric pressure. Further, referring to Fig. 3, in the embodiment, the open end of the oil reservoir chamber 102 is provided with a notch for assembling the oil reservoir chamber cover 202 and the cotter pin 204 to accommodate and fix the oil reservoir chamber cover 202.

In an optional embodiment, continuing to refer to Fig. 3 to Fig. 4, a first seal ring 208 is sleeved on the annular outer wall of the piston 201, and the annular outer wall of the first seal ring 208 abuts against and seals with the inner wall of the oil reservoir chamber 102.

In the technical solution of the above embodiment, referring to Fig. 1 to Fig. 2 and 4, in the initial state, the piston 201 is on the side near the open end of the oil reservoir chamber 102 in the oil reservoir chamber 102 and its travel is limited by the oil reservoir chamber cover 202. As the brake pads wear, during the braking process, the brake fluid in the oil reservoir chamber 102 automatically replenishes the cylinder chamber 101 where the pressure decreases, and the piston 201 moves in the direction of the brake fluid output under external atmospheric pressure, thereby maintaining sufficient oil volume in the brake system for braking

Furthermore, in long-term use, as the brake pads wear out, the brake fluid in the oil reservoir chamber 102 can be automatically replenished to the oil cylinder chamber 101 where the pressure decreases, and an expansion allowance will gradually form between the piston 201 and the oil reservoir chamber cover 202. During braking, the brake fluid will be heated and expanded by conducting the heat of the brake pads, and the brake fluid with expanded volume can enter the oil reservoir chamber 102 through the communication hole 103 in the oil cylinder chamber 101, achieving pressure balance and avoiding the risk of brake disc lock-up, maintaining and optimizing the smooth braking effect of hydraulic disc braking. At this time, the brake fluid entering the oil reservoir chamber 102 will push the piston 201 to move to the side of the oil reservoir chamber cover 202 in the oil reservoir chamber 102 to accommodate the the expanded volume of the brake fluid. When the temperature of the brake fluid is lowered, the volume of the brake fluid is reduced, the brake fluid automatically flows back to the oil cylinder chamber 101 where the pressure decreases, and the piston 301 further gradually returns to its original position with the backflow of the brake fluid under the action of external atmospheric pressure.

Furthermore, a certain expansion allowance can be directly formed between the piston 201 and the oil reservoir chamber cover 202 to accommodate the expansion volume of the brake fluid when heated.

According to the oil pressure balance structure provided in the embodiment 1 of the present disclosure, the piston 201 is movably arranged inside the oil reservoir chamber 102 and its travel is limited by the oil reservoir chamber cover 202. As the brake pads wear, the brake fluid in the oil reservoir chamber 102 automatically replenishes the oil cylinder chamber 101 where the pressure decreases during the braking process. The piston 201 moves in the direction of the brake fluid output, thereby maintaining sufficient oil volume in the brake system for braking.

### Embodiment 2

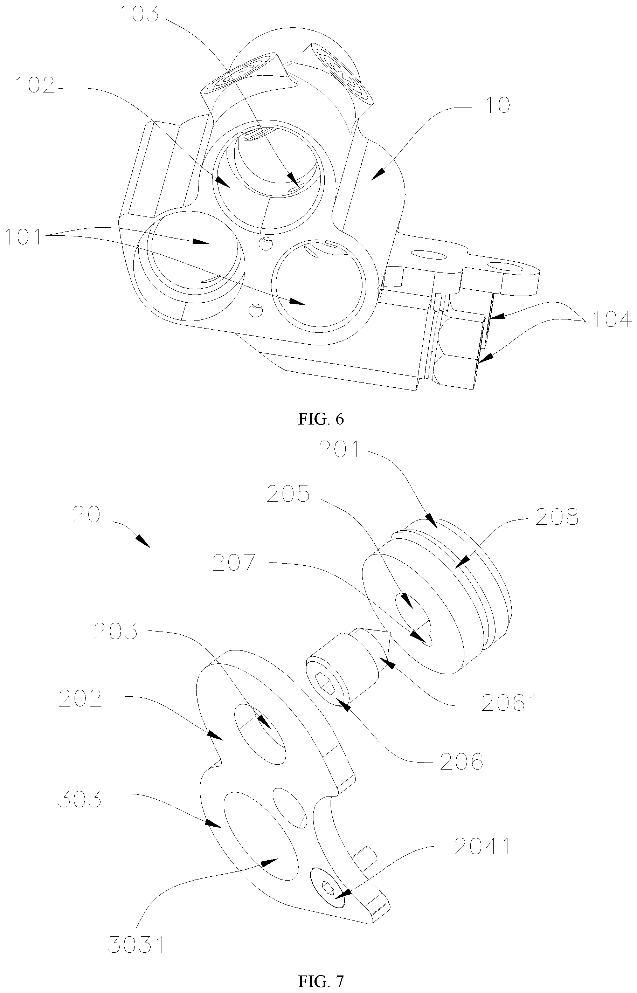

The difference between the embodiment 2 and the embodiment 1 of the present application is that Fig. 5 is a structural schematic diagram of the oil pressure balance structure according to the second embodiment. Fig. 6 is a structural schematic diagram of the pump mechanism according to the second embodiment. Fig. 7 is a structural schematic diagram of the oil pressure balancing component according to the second embodiment. Referring to Fig. 5 to Fig. 7, in the embodiment 2, the oil pressure balancing component 20 further include a fluid replenishment channel 205, and an oil seal plug 206.

The fluid replenishment channel 205 is axially penetrated and formed in the middle of the axial direction of the piston 201.

The middle of the oil seal plug 206 has an external threaded section, and the external threaded section is threaded with an internal threaded surface formed on the inner wall of the fluid replenishment channel 205 to seal the fluid replenishment channel 205. It can be understood that the diameter of the balance hole 203 is at least larger than the diameter of the head of the oil seal plug 206; preferably, the inner diameter of the balance hole 203 covers the oil injection side hole 207, making it easy for the output port of the oil injection tool to enter for performing brake fluid replenishment operations; the inner cavity of the fluid replenishment channel 205 is provided with a tapered sealing surface, and the tail of the oil seal plug 206 is formed with a tapered end 2061 that cooperates with the tapered sealing surface to seal the fluid replenishment channel 205.

In an optional embodiment, continuing to refer to Fig. 7, an oil injection side hole 207 is formed in the middle of the oil seal plug 206 in the axial direction, and the first end of the oil injection side hole 207 penetrates to the head of the oil seal plug 206, and the second end penetrates to the annular side wall of the oil seal plug 206 near the tapered end 2061; the diameter of the balance hole 203 is at least larger than the diameter of the head of the oil seal plug 206.

Other structures not described refer to the embodiment 1.

When brake fluid needs to be replenished in the pump mechanism 10, the output port of the oil injection tool is inserted into the oil injection side hole 207, and a small amount of brake fluid is injected in advance to discharge the residual air in the oil injection side hole 207 and the fluid replenishment channel 205. Then the head of the oil seal plug 206 is unscrewed by a tool along the thread direction to slightly loosen a certain stroke, and an annular fluid inlet channel is formed between the tapered end 2061 and the tapered sealing surface. The fluid inlet channel is communicated to the second end of the oil injection side hole 207. At this time, the injected brake fluid can directly enter the oil reservoir chamber 102, and air will not enter the brake system, thus realizing rapid brake fluid replenishment and ensuring the braking performance of the vehicle.

Meanwhile, it can be understood that the first seal ring 208 sleeved on the oil seal plug 206 and the inner wall surface of the oil injection side hole 207 are still in an interference fit state, so as to avoid the leakage of brake fluid during the fluid replenishment state.

According to the oil pressure balance structure provided in the embodiment 2 of the present disclosure, the piston 201 is movably arranged inside the oil reservoir chamber 102 and its travel is limited by the oil reservoir chamber cover 202. As the brake pads wear, the brake fluid in the oil reservoir chamber 102 automatically replenishes the oil cylinder chamber 101 where the pressure decreases during the braking process. The piston 201 moves in the direction of the brake fluid output, thereby maintaining sufficient oil volume in the brake system for braking; when brake fluid needs to be replenished in the pump mechanism 10, an oil injection tool is inserted into the oil injection side hole 207. The oil seal plug 206 is screwed in the opposite direction along the thread to release it. A fluid inlet channel is formed between the tapered end 2061 and the the tapered sealing surface, and the fluid inlet channel is communicated to the second end of the oil injection side hole 207. At this time, the brake fluid injected can directly enter the oil reservoir chamber 102 to achieve rapid brake fluid replenishment, and air will not enter the brake system, ensuring the braking performance of the vehicle.

### Embodiment 3

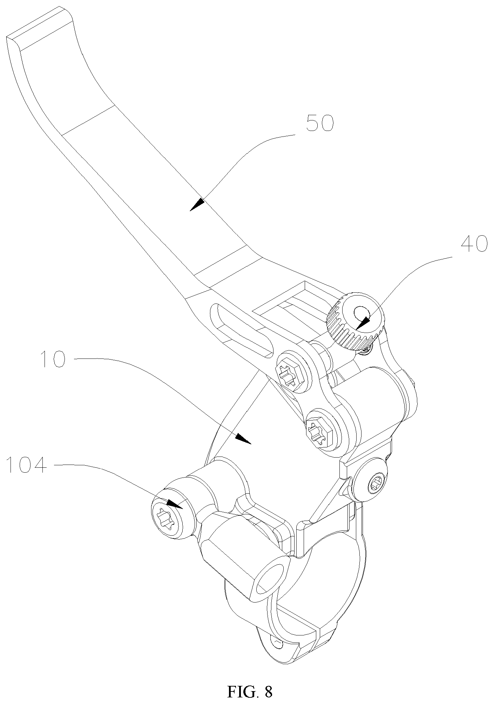

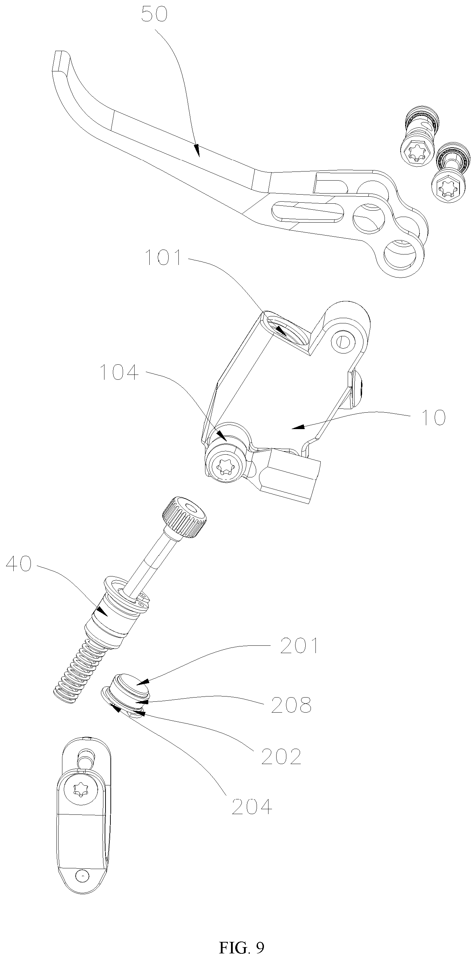

The embodiment 3 of the present application provides a brake lever arranged at the handlebar of the vehicle frame. Fig. 8 is a structural schematic diagram of the pump mechanism according to the embodiment 3. Fig. 9 is an exploded view of the oil pressure balancing component according to the embodiment 3. Referring to Fig. 1 or Fig. 8 to Fig. 9, the brake lever is internally provided with a pump mechanism 10 and an oil pressure balance structure of the embodiment 1 or embodiment 2. The oil cylinder chamber 101 of the pump mechanism 10 is provided with a hydraulic piston 40, and the hydraulic piston 40 is movably connected to the handbrake lever 50 through a piston rod. When the handbrake lever 50 is pinched, the oil pressure piston 40 is driven to move in the oil cylinder chamber 101, thereby driving the brake fluid to reach the brake caliper for braking.

### Embodiment 4

The embodiment 4 of the present application provides a brake caliper (not shown in the figure) arranged at the front/rear wheels of the vehicle frame, and the brake caliper is provided with a pump mechanism 10 and the oil pressure balance structure of the embodiment 1 or the embodiment 2.

### Embodiment 5

The embodiment 5 of the present application provides a cable-actuated hydraulic conversion pump, which is arranged on the vehicle frame and connected to the brake master cylinder through a brake cable/brake hose, and connected to the brake slave pump through an brake hose. Referring to Fig. 5 to Fig. 7, the cable-actuated hydraulic conversion pump is provided with a pump mechanism 10 and the oil pressure balance structure of the embodiment 1 or the embodiment 2.

Different from the embodiment 1 or the embodiment 2, the oil reservoir chamber cover 202 is fixed to the pump mechanism 10 through a cover plate bolt 2041 for fixed assembly.

In this embodiment, a cable-actuated hydraulic brake component 30 is movably arranged in the oil cylinder chamber 101 of the cable-actuated hydraulic conversion pump. The cable-actuated hydraulic brake component 30 is used to drive the brake fluid in the oil cylinder chamber 101 to output from the oil outlet 104 during braking.

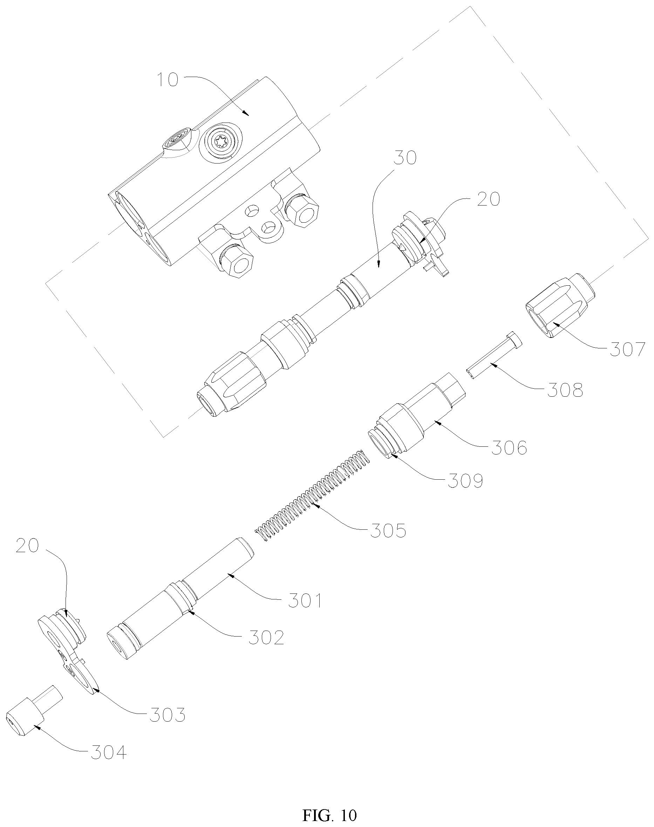

Fig. 10 is an exploded view of the pump mechanism according to the embodiment 2. Referring to Fig. 10, in the embodiment, the number of oil cylinder chambers 101 is two, and the number of cable-actuated hydraulic brake components 30 is also two, located in each of the two oil cylinder chambers 101. The cable-actuated hydraulic brake component 30 includes a piston rod 301, a seal ring 309, a piston ring 302, a plug base 306, an elastic component 305, an end cover plate cover 303, and a brake- cable clamp terminal 304.

The piston rod 301 is movably arranged inside the oil cylinder chamber 101, and a hollow bore axially formed in a middle of the piston rod for a brake cable to pass through.

The seal ring 309 is movably sleeved on a first end of the piston rod 301 and is limited and arranged on a stepped portion formed on an inner wall of the oil cylinder chamber 101.

The piston ring 302 is radially sleeved on a step section formed in the middle of the piston rod 301, and an outer wall of the second piston ring abuts against the inner wall of the oil cylinder chamber 101, a brake fluid chamber is formed between the piston ring 302 and the second seal ring 309, the brake fluid chamber is communicated to the communication hole 103 and the oil outlet 104.

The plug base 306 is threaded with a first open end of the oil cylinder chamber 101 and presses to fix an axial position of the second seal ring 309, and a first movable chamber is formed on a middle of the plug base 306.

One end of the elastic component 305 is limited and arranged in the hollow bore, and the other end of the elastic component 305 extends into the first movable chamber to provide elastic return force after the piston rod 301 moves.

The end cover plate 303 covers a second open end of the oil cylinder chamber 101 to limit a travel starting point of the piston rod 301, and a second assembly hole 3031 is formed on the end cover plate; Further, referring to Fig. 10, the end cover plate 303 and the oil reservoir chamber cover 202 are integrally formed, saving parts and reducing assembly processes.

A first end of the brake- cable clamp terminal 304 passes through the second assembly hole 3031 and is threaded with a second end of the piston rod, and a locking wire screw is arranged on the brake- cable clamp terminal to fix the brake cable.

Continuing to refer to Fig. 10, the cable-actuated hydraulic brake component 30 further includes a cable threading sleeve 308, and a sealing sleeve insert 307.

The cable threading sleeve 308 is inserted into the plug base 306 for a brake cable to pass through.

The sealing sleeve insert 307 is threaded with one end of the plug base 306 away from the second seal ring 309 to fix the cable threading sleeve 308 and seal a first open end of the oil cylinder chamber 101.

Continuing to refer to Fig. 5 to Fig. 6, in the embodiment, the number of the oil reservoir chambers 102 is two, and the two oil reservoir chambers 102 are formed on the same horizontal axis and the open ends are symmetrically distributed, and a single oil reservoir chamber 102 is communicated to a single oil cylinder chamber 101 through a corresponding communication hole 103.

It can be understood that a single oil reservoir chamber 102 can further be provided, and the single oil reservoir chamber 102 is communicated to the two oil cylinder chambers 101 through the communication hole 103.

In the technical solution of the above embodiment, a single cable-actuated hydraulic brake component 30 is used in conjunction with a brake lever and a oil-pressure lower pump during assembly. Specifically, the first end of the brake cable is connected to the brake lever, and the second end passes through the hollow bore of the cable-actuated hydraulic brake component 30 and is fixed to brake- cable clamp terminal 304 through a locking wire screw. The first end of the brake hose is connected to the oil outlet 104 through a brake hose joint, and the second end is connected to the oil-pressure lower pump arranged at the front/rear wheels of the bicycle frame.

When the brake lever is pinched, the piston rod 301 moves axially in the oil cylinder chamber 101 under the traction of the brake cable, and the brake fluid in the brake fluid chamber is driven by the piston ring 302 to be output through the oil outlet 104, and then enters into the oil-pressure lower pump at the front/rear wheels through the brake hose, and the oil-pressure lower pump clamps the brake disc of the front/rear wheels for hydraulic braking, so that the hydraulic circuit is smooth and the braking is stable.

Other structures not described refer to the embodiment 1 or the embodiment 2.

According to the oil pressure balance structure, the brake lever, the brake caliper, and the cable-actuated hydraulic conversion pump provided in the embodiment 2 of the present disclosure, the piston 201 is movably arranged inside the oil reservoir chamber 102 and its travel is limited by the oil reservoir chamber cover 202. As the brake pads wear, the brake fluid in the oil reservoir chamber 102 automatically replenishes the oil cylinder chamber 101 where the pressure decreases during the braking process. The piston 201 moves in the direction of the brake fluid output, thereby maintaining sufficient oil volume in the brake system for braking; when brake fluid needs to be replenished in the pump mechanism 10, an oil injection tool is inserted into the oil injection side hole 207. The oil seal plug 206 is screwed in the opposite direction along the thread to release it. A fluid inlet channel is formed between the tapered end 2061 and the the tapered sealing surface, and the fluid inlet channel is communicated to the second end of the oil injection side hole 207. At this time, the brake fluid injected can directly enter the oil reservoir chamber 102 and no air will enter the braking system, achieving rapid brake fluid replenishment and ensuring the braking performance of the vehicle.

The technical features of the above embodiments may be combined in any manner. For brevity, not all possible combinations of the technical features in the above embodiments have been described. However, any combination of these technical features is encompassed within the scope of this disclosure, provided it is technically feasible and absent contradiction.

The foregoing embodiments only express several implementation modes of the present application, and the description thereof is relatively specific and detailed, but the present invention is not limited thereto. It should be noted that for those of ordinary skill in the art, numerous modifications and variations may be made without departing from the spirit of the present application, and these all fall within the scope of protection of the present invention. Therefore, the protection scope of the patent of the present application shall be subject to the appended claims.

## Claims

1. An oil pressure balance structure, which is used in conjunction with a pump mechanism, **characterized in that** the pump mechanism is provided with at least one oil cylinder chamber, at least one oil reservoir chamber, and an oil pressure balancing component;
the oil cylinder chamber is formed on the pump body and is communicated to an oil outlet in a radial direction;
the oil reservoir chamber is formed on the pump body and is communicated to the oil cylinder chamber through a communication hole, and the oil reservoir chamber and the oil cylinder chamber are filled with brake fluid; and
the oil pressure balancing component is arranged inside the oil reservoir chamber to replenish brake fluid to the oil cylinder chamber during braking to balance brake oil pressure.

2. The oil pressure balance structure according to claim 1, **characterized in that** the oil pressure balancing component comprises a piston, an oil seal plug, and an oil reservoir chamber cover,
the piston is movably arranged inside the oil reservoir chamber, an annular outer wall of the piston is movably sealed with an inner wall of the oil reservoir chamber, and the piston moves toward a direction where the communication hole is located during braking, so as to replenish the brake fluid to the oil cylinder chamber during braking to balance brake oil pressure;
the oil reservoir chamber cover is fixedly arranged on an open end of the oil reservoir chamber, and the oil reservoir chamber cover is provided with a balance hole communicating to external atmospheric pressure.

3. The oil pressure balance structure according to claim 2, **characterized in that** the oil pressure balancing component further comprises a fluid replenishment channel, and a oil seal plug,
wherein the fluid replenishment channel is formed and axially penetrates on the piston;
a middle of the oil seal plug is provided with an external threaded section, and the external threaded section is assembled with an internal threaded surface formed on an inner wall of the fluid replenishment channel to seal the fluid replenishment channel.

4. The oil pressure balance structure according to claim 3, **characterized in that** an inner cavity of the fluid replenishment channel is provided with a tapered sealing surface, and a tail of the oil seal plug is formed with a tapered end that cooperates with the tapered sealing surface to seal the fluid replenishment channel.

5. The oil pressure balance structure according to claim 4, **characterized in that** an oil injection side hole is formed in the middle of the oil seal plug in a longitudinal direction, a first end of the oil injection side hole penetrates to a head of the oil seal plug, and a second end of the oil injection side hole penetrates to an annular side wall of the oil seal plug near the tapered end.

6. The oil pressure balance structure according to claim 2, **characterized in that** the annular outer wall of the piston is fitted with a seal ring, and an annular outer wall of the seal ring is in contact with the inner wall of the oil reservoir chamber for sealing.

7. The oil pressure balance structure according to claim 5, **characterized in that** a diameter of the balance hole is at least greater than a diameter of the head of the oil seal plug.

8. A brake lever, which is assembled at a handlebar of a vehicle frame, **characterized in that** the pump mechanism is provided inside the brake lever, and the brake lever has the oil pressure balance structure according to any one of claims 1-7.

9. A brake caliper, which is assembled at front/rear wheels of a vehicle frame, **characterized in that** the pump mechanism is provided inside the brake caliper, and the brake caliper has the oil pressure balance structure according to any one of claims 1-7.

10. A cable-actuated hydraulic conversion pump, which is assembled on a vehicle frame and connected to a brake master cylinder through a wire/oil pipe, and connected to a brake slave pump through an oil pipe, **characterized in that** the pump mechanism is provided inside the cable-actuated hydraulic conversion pump, and the cable-actuated hydraulic conversion pump has an oil pressure balance structure according to any one of claims 1-7.

## Amended claims

### Amended claims under Art. 19.1 PCT

1. An oil pressure balance structure, which is used in conjunction with a pump mechanism, **characterized in that** the pump mechanism is provided with at least one oil cylinder chamber, at least one oil reservoir chamber, and an oil pressure balancing component;
the oil cylinder chamber is formed on the pump body and is communicated to an oil outlet in a radial direction;
the oil reservoir chamber is formed on the pump body and is communicated to the oil cylinder chamber through a communication hole, and the oil reservoir chamber and the oil cylinder chamber are filled with brake fluid; and
the oil pressure balancing component is arranged inside the oil reservoir chamber to replenish brake fluid to the oil cylinder chamber during braking to balance brake oil pressure;
the oil pressure balancing component comprises a piston, an oil seal plug, and an oil reservoir chamber cover,
the piston is movably arranged inside the oil reservoir chamber, an annular outer wall of the piston is movably sealed with an inner wall of the oil reservoir chamber, and the piston moves toward a direction where the communication hole is located during braking, so as to replenish the brake fluid to the oil cylinder chamber during braking to balance brake oil pressure;
the oil reservoir chamber cover is fixedly arranged on an open end of the oil reservoir chamber, and the oil reservoir chamber cover is provided with a balance hole communicating to external atmospheric pressure;
the oil pressure balancing component further comprises a fluid replenishment channel, and a oil seal plug,
wherein the fluid replenishment channel is formed and axially penetrates on the piston;
a middle of the oil seal plug is provided with an external threaded section, and the external threaded section is assembled with an internal threaded surface formed on an inner wall of the fluid replenishment channel to seal the fluid replenishment channel;
an inner cavity of the fluid replenishment channel is provided with a tapered sealing surface, and a tail of the oil seal plug is formed with a tapered end that cooperates with the tapered sealing surface to seal the fluid replenishment channel.

2. The oil pressure balance structure according to claim 1, **characterized in that** an oil injection side hole is formed in the middle of the oil seal plug in a longitudinal direction, a first end of the oil injection side hole penetrates to a head of the oil seal plug, and a second end of the oil injection side hole penetrates to an annular side wall of the oil seal plug near the tapered end.

3. The oil pressure balance structure according to claim 1, **characterized in that** the annular outer wall of the piston is fitted with a seal ring, and an annular outer wall of the seal ring is in contact with the inner wall of the oil reservoir chamber for sealing.

4. The oil pressure balance structure according to claim 2, **characterized in that** a diameter of the balance hole is at least greater than a diameter of the head of the oil seal plug.

5. A brake lever, which is assembled at a handlebar of a vehicle frame, **characterized in that** the pump mechanism is provided inside the brake lever, and the brake lever has the oil pressure balance structure according to any one of claims 1-4.

6. A brake caliper, which is assembled at front/rear wheels of a vehicle frame, **characterized in that** the pump mechanism is provided inside the brake caliper, and the brake caliper has the oil pressure balance structure according to any one of claims 1-4.

7. A cable-actuated hydraulic conversion pump, which is assembled on a vehicle frame and connected to a brake master cylinder through a wire/oil pipe, and connected to a brake slave pump through an oil pipe, **characterized in that** the pump mechanism is provided inside the cable-actuated hydraulic conversion pump, and the cable-actuated hydraulic conversion pump has an oil pressure balance structure according to any one of claims 1-4.
